# EUROPÄISCHE PATENTANMELDUNG

(11) **EP 2 144 159 A1**
(43) Veröffentlichungstag der Anmeldung: **13.01.2010**
(21) Anmeldenummer: 08012544.6
(22) Anmeldetag: 10.07.2008
(51) Int. Cl.: G06F 9/44

(54) **Verfahren und Programm-Netzwerk zur Ausnahmebehandlung**

(71) Anmelder: Siemens Aktiengesellschaft, 80333 München (DE)
(72) Erfinder: Opaterny, Thilo, 90453 Nürnberg (DE)

(57) **Zusammenfassung**

Für das Verfahren zur Ausnahmebehandlung in einer graphischen Programmiersprache wird mindestens ein Fehler-Programmelement (Box) beinhaltend einen Eingang (IN) und einen Ausgang (OUT) definiert und eine zur Ausnahmebehandlung gespeicherte Ausnahmeinformation in Form einer Daten-Struktur (#my_error_struct).

## Beschreibung

### Fachgebiet der Erfindung

Die Erfindung betrifft ein Verfahren zur Ausnahmebehandlung in einem Computer-Programm das in einer graphischen Programmier-Sprache geschrieben ist.

### Stand der Technik

Computerprogramme wie z. B. zum Betreiben einer speicherprogrammierbaren Steuerung eines Automatisierungssystems, werden mittels Programmiersprachen definiert. Der hier entstandene Programm-Text (auch Source Code genannt) wird dann in einen durch das Ziel-System ausführbaren Assembler-Code übersetzt. Dies kann direkt oder über mehrere Zwischenstufen geschehen.

Die üblicherweise benutzten Programmiersprachen untergliedern sich in textuelle und graphische Programmiersprachen. Bekannte Beispiele für textuelle Programmiersprachen sind C++, Delphi, Java, C#, Ruby, Python, Eiffel u.v.a.

Es ist in Hauptmerkmal der graphischen Programmiersprachen, dass der Programmierer die Programme "zeichnet".
Durch die sich verbreitenden UML (Unified Modelling Language) Werkzeuge und die darin enthaltenen Codegeneratoren finden graphische Programmiersprachen immer mehr Verwendung. Beispiele hierfür sind G (LabView von National Instruments), KOP (Kontaktplan nach IEC61131), FUP (Funktionsplan nach IEC61131), Flowcharts (Flussdiagramme), und Petrinetze. Die Europäische Norm EN 61131, die auf der internationalen Norm IEC 61131 basiert, befasst sich mit den Grundlagen Speicherprogrammierbarer Steuerungen.
Eine Untergruppe der graphischen Programmiersprachen ist gemäß der Verwendung der erzeugten Programme an elektrische Schaltpläne angelehnt: G, KOP, FUP. Die gezeichneten Schaltpläne werden dann von einem Übersetzer (Compiler) genauso wie ein mit Hilfe textueller Programmiersprachen erzeugter Code in ausführbaren Assembler-Code übersetzt (compiliert).

Der Assembler-Code wird im Zielsystem Schritt für Schritt ausgeführt, jedoch sollten die Instruktionen auch parallel ausführbar sein, entsprechend der Ausgangs-Schaltpläne. In einem geeigneten Mehrkernsystem werden die Programm-Teile vom Übersetzer dann tatsächlich auf die einzelnen Rechner-Kerne verteilt und sind somit parallel ausführbar.

Programme, die in einer textuellen Programmiersprache geschrieben sind, bestehen aus sogenannten Statements, worunter beispielsweise Funktionsaufrufe, Zuweisungen und auch Programmkontrollstrukturen zu verstehen sind.
Die an elektrische Schaltpläne angelehnten graphischen Programmiersprachen bestehen aus "Bauteilen" (die die Rolle von Funktionsaufrufen, Prozeduren, Unterprogrammen übernehmen) und "Drähten" (Zuweisungen). Programmkontrollstrukturen sind bei graphischen Programmiersprachen zwar auch möglich und vorhanden, jedoch eher untypisch.

Programme werden heute, insbesondere im professionellen Umfeld, fast immer von mehreren Personen erstellt. Dafür wird das zu lösende Problem in mehrere Teile zerlegt, aus diesen Teilen entstehen die Funktionen mit zugehörigen Schnittstellen. Diese Teil-Probleme werden dann von den einzelnen Personen bearbeitet, soweit möglich können dabei bereits vorhandene Funktionen wiederverwendet werden.

Ein wesentlicher Aspekt beim Erstellen von Software ist die Ausnahme- oder Fehlerbehandlung. Es können Fehler beim Erstellen des Programms eingebaut werden, beispielsweise der falsche Aufruf von Funktionen. Dann arbeitet das Programm entweder falsch weiter oder wird irregulär vom Betriebssystem beendet. Um dies zu verhindern wird viel Programmier-Aufwand spendiert, um die Funktionsparameter auf Plausibilität zu prüfen und Routinen zur Verfügung zu stellen, welche die Fehler auffangen. Weiterhin können Fehlerwerte zurück gegeben werden, damit beispielsweise dem Anwender an der Bedien-Oberfläche bzw. dem Entwickler beim Test eine hilfreiche Fehlermeldung angezeigt werden kann.

Bei textuellen Programmiersprachen hat sich eine strukturierte Ausnahmebehandlung etabliert. Dazu wurden teilweise sogar eigene Schlüsselworte definiert:
try, catch/except, finally, rise/throw.

Ein Beispiel in C++ lautet dann so:

```
 try {
     do_this();
     do_that();
 } catch (std::invalid_argument &e) {
     wail();
 } catch (std::range_error &e) {
     howl();
 } catch (...) {
     std::cerr << "Sonstige Exception" << std::endl;
 };
```

Zunächst wird "do_this()" ausgeführt. Sollte innerhalb der Funktion etwas schief laufen, wird diese abgebrochen und "do_that()" nicht ausgeführt. Lief "do_this()" jedoch glatt durch, dann wird "do_that()" ausgeführt. Sollte es zu einem Fehler gekommen sein, so kann man mittels eines Fehlerobjektes versuchen herauszufinden, was der Fehler war. In einem "catch" Block kann man dann versuchen, aufgetretene Fehler aufzufangen. In jedem Fall würde ein mit "finally" gekennzeichneter Block durchlaufen, in dem man Bereinigungen durchführen kann. Ausnahmen, die außerhalb des "try" und "catch" Blocks auftreten werden von der umschließenden Struktur behandelt. Sollte der Programmierer selber keine weitere Strukturierung vorgenommen haben, so bleibt als letzte Instanz immer das Laufzeitsystem der entsprechenden Programmiersprache und schließlich das Betriebssystem. Somit werden alle auftretenden Fehler auf die eine oder andere Weise aufgefangen.

Der Vorteil strukturierter Ausnahmebehandlung für den Programmierer liegt darin, dass dieser zuerst einmal die Programmroutine zur Bearbeitung der eigentlichen Aufgabe erstellt. Treten keine Ausnahmen auf, so hat er keinen weiteren Aufwand, denn alle Programmteile müssen erstellt und getestet werden.
Treten Ausnahmen auf, so wird das System damit beschäftigt sein den Aufrufstapel zu erforschen und Fehlerobjekte zu erzeugen. Strukturierte Ausnahmebehandlung sollte daher nur verwendet werden, wenn das Auftreten von Ausnahmen unwahrscheinlich ist.

KOP und FUP Programme sind in Netzwerke unterteilt. Die Norm gibt dabei keine Ausführungsreihenfolge der Bauteile innerhalb eines Netzwerkes vor. Ein hoch optimierter Compiler könnte also das gesamte Netzwerk durch einen massivparallelen Verarbeitungsschritt ersetzen. Boolesche Verknüpfungen lassen sich durch Tabellen (Wahrheitstafeln) darstellen, die Netze lassen sich auf Tabellen abbilden, die Tabellen sind bereits zum Zeitpunkt des Übersetzens fest: Mit Hilfe der logischen Verknüpfungen lassen sich in der Aussagenlogik und Schaltalgebra aus einfacheren Aussagen kompliziertere Aussagen zusammensetzen. Dabei muss der Wahrheitswert der zusammengesetzten Aussage durch die Wahrheitswerte der enthaltenen einfacheren Aussagen eindeutig bestimmt sein, beispielsweise durch eine Wahrheitstabelle (Wahrheitstafel). Eine Wahrheitstabelle ist die Definition einer logischen Verknüpfung. Mehrere Eingangssignale (1, 2, 3 oder mehr) werden mittels logischer Verknüpfung zu einem Ausgangssignal (auch 2 oder mehr Ausgangssignale sind möglich) zusammengesetzt. Die logische Verknüpfung definiert die Gesetzmäßigkeiten und logische Zusammenhänge zwischen Eingangssignal und Ausgangssignal.
In der Norm IEC61131 wird nur definiert, dass die Netzwerke nacheinander abgearbeitet werden. Damit stehen Berechnungen eines vorangegangenen Netzwerkes nachfolgenden Netzwerken zur Verfügung. Die Aufteilung in Netzwerke dient somit auch dazu das zu lösende Problem in leichter fassbare Teile zu zergliedern.

Da das oben beschriebene Vorgehen eine sequentielle Abarbeitung voraussetzt kann eine strukturierte Ausnahmebehandlung im Falle von graphischen Programmiersprachen, die parallele Abarbeitung von Aufrufen erlauben, nicht angewendet werden.

Aufgabe der Erfindung ist, ein Verfahren zur Ausnahmebehandlung bei graphischen Programmiersprachen anzugeben.

### Darstellung der Erfindung

Diese Aufgabe wird gelöst durch ein Verfahren gemäß den Merkmalen des Anspruchs 1 und ein Programm-Netz gemäß den Merkmalen des Anspruchs 5.

Für das Verfahren zur Ausnahmebehandlung in einer graphischen Programmiersprache wird mindestens ein Fehler-Programmelement (Box) beinhaltend einen Eingang (IN) und einen Ausgang (OUT) definiert und eine zur Ausnahmebehandlung gespeicherte Ausnahmeinformation in Form einer Daten-Struktur.

Die Daten-Struktur liefert dabei Informationen über die aufgetretene Ausnahme. Die Art der der Ausnahmeinformation ist dabei abhängig vom der Programmierung zugrunde liegenden Hardware System. Es ist jedoch möglich anzugeben, welche Information allgemein gültig bereit gestellt werden sollte.

Vorteilhafte Ausgestaltungen und Weiterbildungen sind in den Unteransprüchen angegeben.

Die Fehler-Box liefert Informationen zu einer Ausnahme. Diese kann der Anwender verwenden, um auf die Ausnahme in geeigneter Form zu reagieren. Er benötigt dazu jedoch zusätzliche Hilfsmittel beispielsweise um das Netzwerk, in dem die Ausnahme aufgetreten ist, zu identifizieren.

Ein Beispiel einer Datenstruktur für KOP und FUP sieht wie folgt aus:

```
 typedef structure error
     enum id; // event id's
     enum reaction; // 0 == ignore,
                       1 == substitute,
                       2 == skip
     enum mode; // addressing mode direct, indirect
     typedef structure code_address
         enum block_type; // OB, FB, FC
         uint block_number;
         udint address;
     end
    typedef structure data_address
         byte width; // bit, byte, word, dword, lword
         byte type; // bool, char, int, sint
         enum area; // I Q M DB SLOT
         uint db_number; // or slot
         udint instruction;
    end
 end
```

Die Daten-Struktur sollte vorteilhafterweise mindestens eine der folgenden Informationen enthalten
- Art der Ausnahme,
- Ort der Ausnahme,
- an der Ausnahme beteiligter Operand,
- Adressierungsart.

Die Fehler-ID (id) ist eine Enumeration aller im System definierten Fehler. Dahinter können sich beispielsweise folgende Ereignisse verbergen (Aufzählung nicht abschließend):
der Wert ist außerhalb des Bereichs, die Zugriffsrechte sind nicht ausreichend, oder es wird versucht, auf eine nicht vorhandene Datenadresse zuzugreifen.

Mit der Angabe der Adressierungsart (mode) wird die Interpretation der Datenadresse erleichtert. Im Allgemeinen ist die Datenadresse von der Datenstruktur Union. Bei einem direkten Zugriff gibt sie dessen Adresse wieder, z. B. MW60000 oder DB5.DBD1000. Bei indirektem Zugriff kann es entweder sein, dass der zum Zugriff verwendete Zeiger nicht definiert ist oder der verwendete Offset über den erlaubten Bereich hinweg adressiert. Im zweiten Fall wird die versuchte fehlerhafte Adresse angegeben, im anderen Fall muss der Zeiger selbst angegeben sein. Die genaue Definition der Datenadresse hat immer auf die speziellen Umstände des Zielsystems Rücksicht zu nehmen.

Dem Anwender ist klar, dass das Programm-Netzwerk auf Assembler-Anweisungen des Zielsystems abgebildet wird, jedoch bekommt er die Code-Adressen niemals zu Gesicht. Um also ein Programm-Netzwerk zu identifizieren nutzt das "UDINT" der Instruktion nichts. Der Anwender kennt Netzwerknummer, Netzwerknamen und Sprungmarken.
Die Netzwerknummer ändert sich jedoch leicht und Netzwerknamen sind schlecht abzufragen.
Eine vorteilhafte Erweiterung der IN-Range-Box und der Vergleiche kann dazu verwendet werden als Operanden Sprungmarken und das "UDINT" der Instruktion zu verwenden. Der KOP/FUP Compiler kann aus den Sprungmarken wiederum Codeadressen bilden. Für das Zielsystem sind diese Vergleiche ganz normale "UDINT"-Vergleiche, für den Anwender sieht es so aus, als ob er Sprungmarken miteinander vergleicht.

Die Fehler-Reaktion (reaction) definiert, wie auf die festgestellte Ausnahme reagiert wurde.
Wegen der möglichen parallelen Ausführung des Codes in einem Programm-Netzwerk kann man nicht einfach bestimmen welcher Programmteil zuerst ausgeführt wird und welche Programmteile beim Auftreten einer Ausnahme noch nicht durchlaufen waren. Deshalb werden in Abhängigkeit der Ausnahme drei Vorab-Reaktionen definiert.

Die einfachste Möglichkeit ist, das Problem zu ignorieren. Wenn zum Beispiel auf eine nicht existierende Adresse wie M60000.0 geschrieben werden soll, so hat dies für den Rest des Netzwerkes keine Auswirkungen.

Gegebenenfalls gibt es eine Umgehungsmöglichkeit. Wenn zum Beispiel von einer nicht existierenden Adresse wie I60000.0 gelesen werden soll, dann kann man mit einem Ersatzwert weiterarbeiten.

Die Voraussetzungen zur Ausführung des Programmcodes eines Netzwerkes fehlen, das Netzwerk muss daher übersprungen werden. Wenn zum Beispiel eine Methode eines an den Baustein übergebenen Objektes ausgeführt werden soll, der Zeiger auf dieses Objekt jedoch NULL ist. Derartige Situationen kann man vorab durch den Compiler prüfen lassen, der Anwender muss dafür nichts in sein Netzwerk einfügen.

Aus Sicht des Anwenders wurde der Programmcode des Netzwerkes entweder ausgeführt oder nicht ausgeführt. Ist innerhalb des ausgeführten Netzwerkes eine Ausnahme aufgetreten wird dazu Information gespeichert, der Rest des Netzwerkes wird dann, gegebenenfalls mit Ersatzwerten (die zweite Möglichkeit im oberen Fall) weiter durchlaufen.

Bei Programmen die in einer graphischen Programmiersprache definiert sind, können aufgrund der parallelen Ausführbarkeit mehrere Ausnahmen auftreten. Daher kann in einer Ausführungsform der Erfindung die Fehler-Box um mindestens einen Eingang erweitert werden, über den man alle aufgetretenen Ausnahmen iterieren kann. Es sollte jedoch dabei bedacht werden, dass die zusätzliche Sicherheit auf Kosten der Performance des Programms gehen kann.

### Kurzbeschreibung der Zeichungen

Im folgenden wird die Erfindung anhand eines Ausführungsbeispieles erläutert. Dabei zeigt
Figur 1 ein Fehler-Programmelement
Figur 2 ein Beispiel-Netzwerk zur Steuerung eines Motors und
Figur 3 die zugehörige Ausnahme-Behandlung.

### Beschreibung der bevorzugten Ausgestaltungsform

Das sichtbare Element der strukturierten Ausnahmebehandlung in graphischen Programmiersprachen ist das Fehler-Programmelement BOX, auch Fehler-Box genannt. Die Fehler-Box hat einen (EN-)Eingang IN und einen (ENO-)Ausgang, entsprechend der Boxen bei KOP oder Fup, gemäß der Norm. Weiterhin hat die Box einen Ausgang für die oben beschriebene Fehler-Struktur #my_error_struct.
Wenn der Eingangswert IN der Fehler-Box TRUE ist (also eine Ausnahme aufgetreten ist), dann wird erstens dem Anwender die in der Ausnahme gespeicherte Information verfügbar gemacht und danach diese Information wieder zurück gesetzt.
In dem Fall wenn der Eingangswert IN TRUE ist und eine Ausnahmeinformation vorhanden ist, also eine Ausnahme in einem der vorhergehenden Netzwerke aufgetreten ist, wird auch der Ausgangswert OUT der Fehler-Box den Wert TRUE annehmen. Die Ausnahmeinformation wird dann in eine Fehler-Struktur kopiert und steht dem Anwender zur weiteren Auswertung zur Verfügung. Die Ausnahmeinformation selber wird danach zurück gesetzt.

Um nun eine Ausnahmebehandlung in einem Programm einer graphischen Programmiersprache wie KOP oder FUP zu implementieren fügt man hinter das zu behandelnde Netzwerk ein weiteres Netzwerk mit einer Fehlerbox ein. Diese Box ist vorteilhafterweise direkt an die Programmverlauf angeschlossen sein, sie kann aber auch eine Vorverknüpfung haben.

Es ist nicht notwendig, hinter jedes Netzwerk eine Ausnahme-behandlung zu implementieren. Die erste auftretende Ausnahme wird gespeichert und von der Fehler-Box geliefert. Durch die Fehler-Box wird dann der Speicher wieder zurück gesetzt. Danach folgende Netzwerke können somit neu auftretende Ausnahmen speichern. Dies funktioniert ähnlich dem "try"-Block in Programmen in textuellen Sprachen, wo das Auftreten der ersten Ausnahme alle weiteren Statements im "try"-Block überspringt.

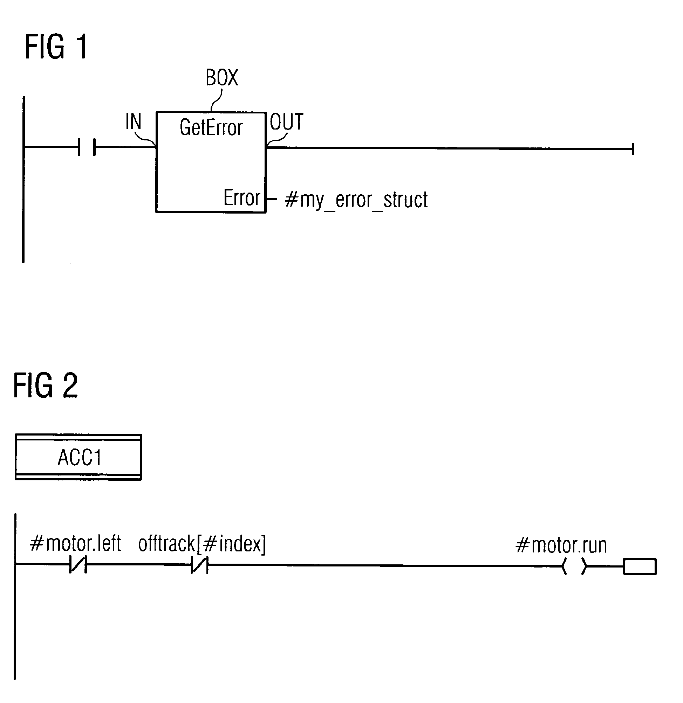

In Figur 2 ist als Beispiel ein Programm zur Steuerung eines Motors, beispielsweise in einem Automatisierungsumfeld, graphisch dargestellt. ACC1 ist die Sprungmarke des Programm-Netzwerks. Der Anwender hat ein Programm-Netzwerk, bei dem ein übergebener Parameter #index aus dem Feld offtrack gelesen werden soll. ACC1 Es ist nun zu prüfen, ob #index kleiner ist als die Größe des Feldes. Der Compiler kann diese Prüfung automatisch in die Assemblerinstruktionen integrieren, jedoch bietet die graphische Programmiersprache nach IEC61131 ursprünglich keine Mittel das Verhalten der Ausnahmebehandlung zu bestimmen.

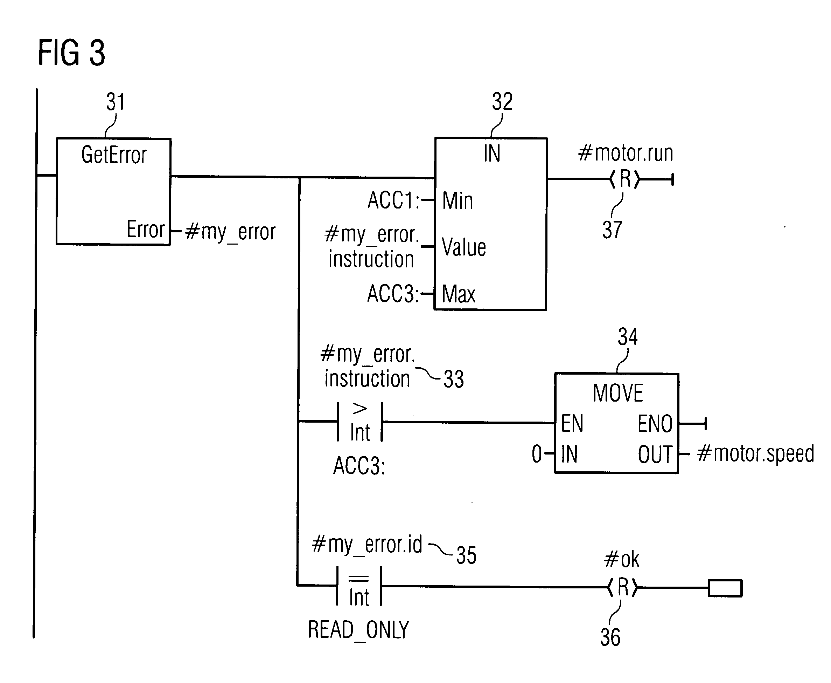

Figur 3 zeigt nun ein Beispiel einer Ausnahmebehandlung nach dem erfindungsgemäßen Verfahren.
Die Fehler-Box GetError 31 liefert in einer vom Benutzer lokal im Baustein angelegte #my_error Struktur die zur Ausnahme gespeicherte Information. Ist keine Ausnahme aufgetreten, dann bleibt nach den (KOP / FUP) Regeln der Rest des dargestellten Netzes wirkungslos.
Anderenfalls werden parallel drei Dinge kontrolliert (gemäß einer Ausführungsform der Erfindung durch eine Box mit mehreren Eingängen 31).
Trat die Ausnahme zwischen den Sprungmarken ACC1 und ACC3 statt, dann wird der Wert #motor.run zurückgesetzt <R> 37, d. h. der zu steuernde Motor ausgeschaltet.
Trat die Ausnahme in einer zweiten Alternative nach der Sprungmarke ACC3 auf 33, dann wird der Wert #motor.speed auf "0" gesetzt 34, d. h. die Motor-Geschwindigkeit auf 0 reduziert. Die dritte Alternative prüft ab, ob auf nur-lesbaren Speicher READ_ONLY zugegriffen wurde 35, als Reaktion hierauf wird der Wert #ok zurück gesetzt <R> 36.

## Patentansprüche

1. Verfahren zur Ausnahmebehandlung mittels einer graphischen Programmiersprache, mit
- mindestens einem Fehler-Programmelement (Box) beinhaltend einen Eingang (IN) und/oder einen Ausgang (OUT)
- eine zur Ausnahmebehandlung gespeicherte Ausnahmeinformation in Form einer Daten-Struktur (#my_error_struct).

2. Verfahren nach Patentanspruch 1, **dadurch gekennzeichnet, dass** die Ausnahmeinformation abhängig ist von dem damit programmierten Hardware System.

3. Verfahren nach Patentanspruch 1 oder 2, **dadurch gekennzeichnet, dass** die Daten-Struktur (#my_error_struct) mindestens eine der folgenden Informationen enthält:
- Art der Ausnahme,
- Ort der Ausnahme,
- an der Ausnahme beteiligter Operand,
- Adressierungsart.

4. Verfahren nach einem der vorhergehenden Patentansprüche, **dadurch gekennzeichnet, dass** die Daten-Struktur (#my_error_struct) mindestens eine der folgenden Ausnahme-Behandlungen definiert:
- Ignorieren,
- Umgehen,
- Überspringen.

5. Verfahren nach einem der vorhergehenden Patentansprüche, **dadurch gekennzeichnet, dass** die Ausnahmeinformation in einem ersten Schritt verfügbar gemacht wird und in einem zweiten Schritt danach direkt zurück gesetzt wird.

6. Verfahren nach einem der vorhergehenden Patentansprüche, **dadurch gekennzeichnet, dass** zur Identifikation des von der Ausnahme betroffenen Netzwerks die Spungmarke sowie die zugehörige Speicheradresse der Instruktion verwendet wird.

7. Verfahren nach einem der vorhergehenden Patentansprüche, **dadurch gekennzeichnet, dass** das Fehler-Programmelement (Box) mindestens einen weiteren Eingang umfasst.

8. Verfahren nach einem der vorhergehenden Patentansprüche, **dadurch gekennzeichnet, dass** es sich bei der graphischen Programmiersprache um KOP oder FUP gemäß ISO IEC 61131 handelt.

9. Programm-Netz einer graphischen Programmiersprache mit Mitteln zur Ausnahmebehandlung enthaltend
- mindestens ein Fehler-Programmelement (Box) mit einem Eingang (IN) und einem Ausgang (OUT)
- eine zur Ausnahmebehandlung gespeicherte Ausnahmeinformation in Form einer Daten-Struktur (#my_error_struct).

10. Programm-Netz einer graphischen Programmiersprache nach Patentanspruch 7, **dadurch gekennzeichnet, dass** die Daten-Struktur (#my_error_struct) mindestens eine der folgenden Informationen enthält:
- Art der Ausnahme,
- Ort der Ausnahme,
- an der Ausnahme beteiligter Operand,
- Adressierungsart.

11. Programm-Netz einer graphischen Programmiersprache nach Patentanspruch 7 oder 8, **dadurch gekennzeichnet, dass** die Daten-Struktur (#my_error_struct) mindestens eine der folgenden Ausnahme-Behandlungen definiert:
- Ignorieren,
- Umgehen,
- Überspringen.
